# FASCICULE DE BREVET EUROPEEN

(11) **EP 0 853 457 B1**
(45) Date de publication et mention de la délivrance du brevet: **17.10.2001**
(21) Numéro de dépôt: 97931846.6
(22) Date de dépôt: 01.07.1997
(51) Int. Cl.: A47J 37/12

(54) **FRITEUSE A CUVE AMOVIBLE**
FRITIERGERÄT MIT HERAUSNEHMBARER WANNE
DEEP FAT FRYER WITH REMOVABLE VESSEL

(30) Priorité: 03.07.1996 FR 9608495
(43) Date de publication de la demande: 22.07.1998
(73) Titulaire: SEB S.A., 69130 Ecully (FR)
(72) Inventeur: DESNOYERS, Jean-Claude, . (FR); BEUGNOT, Bernard, F-21120 Is Sur Tille (FR)
(86) Numéro de dépôt international: FR9701179
(87) Numéro de publication internationale: WO9801064

(56) Documents cités:
- WO-A-96/05761
- CH-A- 598 794
- FR-A- 2 724 835

## Description

### DOMAINE TECHNIQUE

La présente invention se rapporte au domaine technique général des appareils de chauffe ou de cuisson conçus pour la réalisation de fritures dans un bain d'huile en particulier.

La présente invention concerne un appareil de chauffe pour aliments, en particulier pour la réalisation de fritures dans un bain d'huile, comprenant une cuve montée de manière amovible dans un bâti, ainsi que des moyens de chauffe disposés sous la cuve, auxquels sont associés des moyens de régulation thermique, des moyens de protection thermique et des moyens de détection de présence de la cuve, comme précisé dans la première partie de la revendication 1.

La présente invention concerne plus particulièrement mais non exclusivement une friteuse électrique à cuve amovible destinée à la cuisson d'aliments tels que des frites, de la viande ou des poissons, et comportant des moyens de détection de la présence de la cuve.

### TECHNIQUE ANTERIEURE

Les friteuses électriques traditionnelles à cuve fixe sont connues depuis de nombreuses années. Les modèles de dernière génération comportent en particulier une isolation thermique des parois latérales apportant une meilleure sécurité, contre les risques de brûlure par contact. Néanmoins le nettoyage de ces appareils reste une opération peu aisée, malgré la présence d'un couvercle amovible.

Les friteuses à cuve amovible présentent une nettoyabilité bien meilleure, notamment lorsque la cuve amovible est recouverte d'une couche de protection en matériau anti-adhésif tel que le PTFE. Cependant ces appareils sont souvent onéreux et sophistiqués. Ces appareils, pour respecter les normes de sécurité, doivent comporter des dispositifs empêchant leur utilisation lorsqu'ils se trouvent dans une mauvaise configuration, par exemple absence de cuve, mauvais positionnement de la cuve, voire remplissage insuffisant de la cuve.

Le document WO-A-96/05761 présente notamment une friteuse à cuve amovible comportant un dispositif de sécurité visant à couper l'alimentation électrique lorsque la cuve n'est pas suffisamment remplie, ou lorsque la cuve n'est pas présente dans le bâti de l'appareil. Dans les deux cas, il s'agit d'assurer la sécurité de l'utilisateur et d'éviter tout dommage qui pourrait être causé à l'appareil.

Ce dispositif comporte des moyens de détection aptes d'une part à détecter si la cuve est sensiblement vide et dans ce cas à ouvrir le circuit d'alimentation électrique des moyens de chauffe, et d'autre part à détecter si la cuve est remplie de manière à atteindre un poids minimum préétabli, pour dans ce cas fermer le circuit d'alimentation des moyens de chauffe, ainsi que des moyens aptes à fermer ou ouvrir le circuit d'alimentation électrique des moyens de chauffe lorsque la cuve amovible est respectivement présente ou absente dans le bâti.

Un tel dispositif permet bien évidemment de protéger l'utilisateur d'une situation dangereuse ou pénalisante pouvant être créée par la mise en marche des moyens de chauffe alors que l'appareil n'est pas dans une configuration normale. Ce dispositif permet en particulier d'éviter les surchauffes dues à un chauffage à vide, susceptibles d'entraîner la fonte du fusible de protection thermique de l'appareil.

Ce dispositif comporte néanmoins de nombreuses pièces afin de réaliser les fonctions de sécurité correspondant aux différents cas de figures : cuve absente, absence ou trop faible quantité de cofacteur de cuisson dans la cuve. La prise en compte du poids de la cuve pour autoriser le fonctionnement de l'appareil implique l'utilisation de moyens de rappels calibrés. Ce dispositif est par conséquent sophistiqué et donc onéreux.

II est connu du document CH 598 794 une friteuse comportant une cuve, des moyens de chauffe disposés dans la cuve, des moyens de régulation, des moyens de protection contre les surtempératures permettant la coupure du circuit d'alimentation des moyens de chauffe lorsque la quantité d'huile ou de graisse fondue présente dans la cuve est inférieure à la quantité minimale requise. Toutefois la friteuse ne comporte pas de boîtier de réception de la cuve et les moyens de protection sont agencés pour réagir en fonction de la charge de la cuve.

II est connu du document FR 2 724 835 (base de la division en deux parties des revendications) une friteuse à cuve amovible destinée à contenir le cofacteur de cuisson et les aliments à cuire, comprenant un bâti dans lequel est prévu un logement destiné à recevoir la cuve, des moyens de chauffe, des moyens de régulation, des moyens de protection contre les surtempératures en relation thermique avec la cuve permettant d'éviter que le niveau de température de la cuve dépasse un seuil de sécurité préétabli, des moyens de détection de présence de la cuve. Toutefois ce document n'envisage pas les cas de fonctionnement avec dans la cuve une quantité d'huile ou de graisse fondue inférieure à la quantité minimale indiquée. En outre les moyens de chauffe sont disposés dans la cuve. Une telle disposition complique la manipulation de l'appareil.

### EXPOSE DE L'INVENTION

La présente invention vise donc à proposer une friteuse permettant de remédier aux différents inconvénients précités, susceptible d'offrir une utilisation pratique et commode pour l'utilisateur tout en étant d'une conception simple faisant appel le moins possible à des dispositifs sophistiqués.

Ces buts sont réalisés dans un appareil de cuisson, notamment friteuse, à cuve amovible destinée à contenir le cofacteur de cuisson et les aliments à cuire, comprenant un bâti dans lequel est prévu un logement destiné à recevoir la cuve, des moyens de chauffe, des moyens de régulation, des moyens de protection contre les surtempératures en relation thermique avec la cuve permettant d'éviter que le niveau de température de la cuve dépasse un seuil de sécurité préétabli, des moyens de détection de présence de la cuve, du fait que les moyens de chauffe sont disposés au fond dudit logement, et que les moyens de régulation sont en relation thermique avec la cuve, permettent de contrôler le niveau de température de la cuve et sont susceptibles de provoquer une coupure du circuit d'alimentation des moyens de chauffe avant que les moyens de protection ne soient sollicités, lorsque la cuve comporte moins de cofacteur de cuisson que la quantité minimum indiquée.

L'utilisateur dispose ainsi d'un appareil dont l'utilisation est pratique et agréable. En effet les moyens de protection contre les surtempératures généralement utilisés dans les friteuses sont de type fusible, et présentent une dégradation irréversible après avoir été sollicités. L'utilisateur ne peut alors remettre son appareil en état de marche lui-même. Avec la caractéristique de fonctionnement objet de la présente invention, l'utilisateur ne subit pas le désagrément de devoir faire réparer son appareil lorsqu'il l'a utilisé avec une quantité trop faible de matière grasse, voire lorsqu'il a mis en marche l'appareil sans avoir mis de matière grasse. Cette caractéristique de fonctionnement permet d'utiliser un système de détection de présence de la cuve très simple, puisque le seul paramètre à prendre en compte est la présence correcte de la cuve. Cette simplification de la conception contribue à obtenir un appareil de construction peu onéreuse. De plus, cet appareil est très facile à nettoyer grâce à sa cuve amovible qui peut être lavée à la main en dehors de l'appareil ou même passée au lave-vaisselle.

Selon une version avantageuse de l'invention, les moyens de régulation sont agencés dans une paroi du logement et comportent au moins un organe de liaison prévu pour assurer une liaison thermique entre les moyens de régulation et la cuve placée en position de fonctionnement dans le logement, ledit organe étant monté mobile de façon à pouvoir se prolonger dans le logement au-delà de la paroi du logement en direction de la paroi de la cuve.

Avantageusement l'organe de liaison est monté sur une platine supportant les moyens de régulation et montée mobile par rapport au bâti.

De manière avantageuse l'organe de liaison est disposé de manière à exercer un contact mécanique contre la cuve lorsque celle-ci est placée en position de fonctionnement.

Le contact thermique par conduction entre la cuve chaude et les moyens de régulation permet d'obtenir de meilleures caractéristiques de régulation.

Avantageusement la platine comporte des moyens de positionnement par rapport à la cuve, distincts de l'organe de liaison, disposés pour garantir un contact reproductible de l'organe de liaison avec la cuve.

L'utilisation d'une telle platine permet de placer les moyens de régulation à une distance constante de la cuve, indépendante de la géométrie réelle de la cuve utilisée, due aux tolérances de fabrication industrielle, et donc indépendante de la position relative de la paroi de ladite cuve par rapport à la paroi du bâti à laquelle sont reliés les moyens de régulation, indépendante aussi des dilatations thermiques de la cuve lors de l'utilisation de l'appareil. Elle permet aussi de garantir un contact offrant une bonne reproductibilité de positionnement angulaire entre l'organe de liaison et la cuve. L'image thermique obtenue par les moyens de régulation est ainsi fiable et reproductible d'un appareil à l'autre. Le retrait de la cuve et son repositionnement ne nécessite aucune manoeuvre particulière.

Selon une version avantageuse de l'invention, les moyens de détection de présence de la cuve consistent en des moyens de transmission mécanique coopérant avec des moyens de coupure du circuit d'alimentation des moyens de chauffe et disposés de manière à être actionnés par la cuve lorsque celle-ci est placée en position de fonctionnement, lesdits moyens de détection de présence étant prévus de manière à fermer ledit circuit d'alimentation lorsque la cuve est correctement positionnée.

La conception du système de régulation permet en effet de tolérer sans dommage pour l'appareil des utilisations non conformes telles que chauffe de l'appareil en l'absence de matières grasses de la cuve ou en présence d'une quantité insuffisante de matières grasses. La sécurité concernant la cuve amovible peut donc se limiter à vérifier la présence correcte de ladite cuve.

### DESCRIPTION SOMMAIRE DES DESSINS

L'invention sera mieux comprise à l'étude du mode de réalisation pris à titre nullement limitatif et illustré dans les figures annexées dans lesquelles :
- la figure 1 est une vue schématique en coupe transversale de l'appareil, dans laquelle les connexions électriques ne sont pas représentées,
- la figure 2 est une vue partielle en coupe transversale de l'appareil, détaillant une version avantageuse du montage des moyens de régulation,
- la figure 3 est une vue de face du montage des moyens de régulation sur la face interne de la paroi intérieure du bâti, dans laquelle lesdits moyens de régulation sont représentés de manière schématique,
- la figure 4 est une vue partielle en coupe transversale de l'appareil, détaillant une version avantageuse du montage des moyens de détection de présence de la cuve.

### MEILLEURE MANIERE DE REALISER L'INVENTION

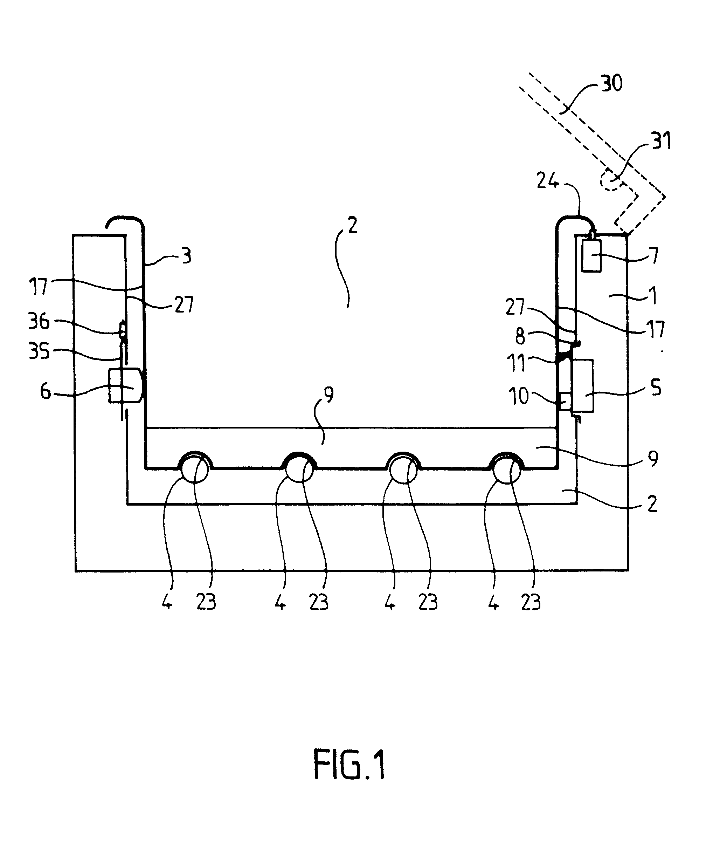

La friteuse telle qu'illustrée notamment à la figure 1 comporte de manière connue un bâti 1 comportant un logement 2, une cuve 3 amovible prenant place dans le logement 2, des moyens de chauffe 4 disposés au fond du logement 2, des moyens de régulation 5 en relation thermique avec la cuve 3, des moyens de protection contre les surtempératures 6 en relation thermique avec la cuve 3, des moyens de détection de présence 7 de la cuve 3, avantageusement un couvercle 30 muni d'un joint d'étanchéité 31.

Les moyens de chauffe 4 peuvent consister par exemple en un élément chauffant blindé, qui présente l'avantage d'une construction peu onéreuse et qui offre de bonnes possibilités de régulation. Dans une variante de construction, les moyens de chauffe 4 peuvent comporter plusieurs éléments de ce type.

Le fond de la cuve 3 possède avantageusement des enfoncements 23 dont la forme correspond sensiblement à celle des moyens de chauffe 4 de telle sorte que la cuve 3 correctement positionnée prenne une position stable en venant au contact des moyens de chauffe 4. Cette disposition permet d'assurer une meilleure conduction thermique entre les moyens de chauffe 4 et la cuve 3 dans laquelle se réalise la cuisson. Elle permet aussi d'assurer un détrompage favorisant le choix de la position de la cuve 3, si par exemple la cuve 3 est de forme sensiblement parallélépipédique et le fond de la cuve 3 est asymétrique. L'utilisateur voulant placer sa cuve 3 dans l'appareil la tournera spontanément de 180° s'il voit que dans la position initiale la forme du fond de la cuve 3 ne correspond pas à la forme des moyens de chauffe 4.

De manière avantageuse, les moyens de régulation 5 et les moyens de protection contre les surtempératures 6 sont disposés en regard d'une paroi latérale 17 de la cuve 3. Cette disposition permet de réserver l'espace sous la cuve 3 pour l'implantation des moyens de chauffe 4, et ainsi d'obtenir un chauffage plus homogène de l'ensemble de la cuve 3.

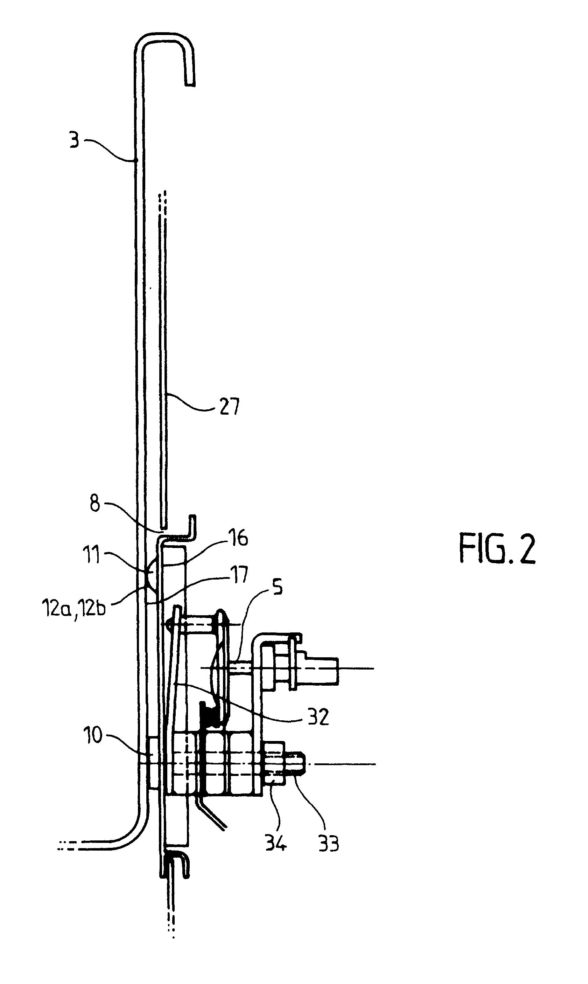

Les moyens de régulation 5 sont avantageusement constitués par un thermostat bimétallique 32, tel que représenté sur la figure 2 ; une régulation électronique de température pourrait également être envisagée. De préférence, lesdits moyens de régulation 5 sont fixés sur une platine 16 venant s'appuyer contre une paroi latérale 17 de la cuve 3 grâce à un organe de liaison 10. La platine 16 est placée avantageusement en face d'une fenêtre 8 ménagée dans la paroi intérieure 27 du bâti 1. Ladite paroi intérieure 27 peut être constituée de manière avantageuse par la paroi d'une contre-cuve réalisée en matériau métallique.

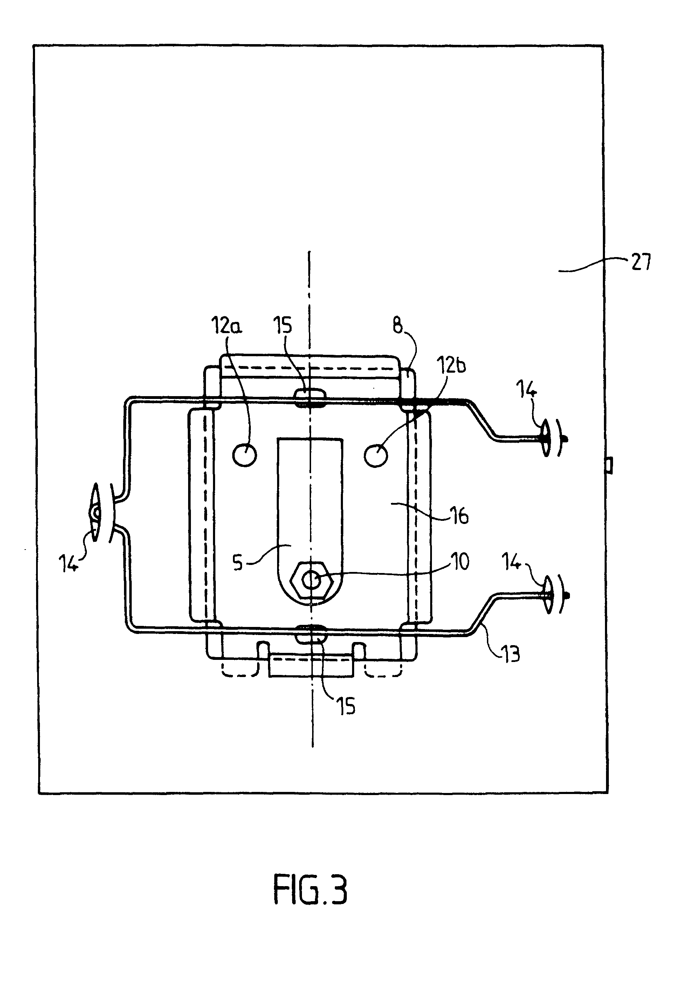

L'organe de liaison 10 est avantageusement constitué par une vis 33 à tête plate faite d'un matériau bon conducteur de la chaleur, la tête de la vis étant placée du coté de la cuve, ladite vis 33 traversant le corps du thermostat 32 et comportant à son extrémité libre un écrou 34 assurant le serrage, tel que représenté à la figure 2. De préférence, la platine 16 comporte des moyens de positionnement 11 disposés pour garantir un contact reproductible de l'organe de liaison 10 avec la cuve 3 malgré les tolérances de fabrication industrielle. Ces moyens de positionnement 11 sont avantageusement constitués par 2 moyens de contact 12a et 12b, lesquels sont réalisés par exemple sous forme d'emboutis, tel que représenté à la figure 3. Avantageusement la hauteur des deux moyens de contact 12a et 12b est identique à celle de l'organe de liaison 10 de telle sorte que la platine 16 soit sensiblement parallèle à la paroi latérale 17 de la cuve 3.

L'écart entre le moyen de contact 12a et le moyen de contact 12b choisi de préférence supérieur au diamètre de l'organe de liaison 10 constitué par exemple par la tête plate de la vis 33 permet d'assurer le positionnement à plat dudit organe de liaison 10 sur la paroi latérale 17 de la cuve 3, et ainsi de garantir un bon contact thermique entre la cuve 3 et les moyens de régulation 5. La platine 16 est maintenue plaquée contre la paroi latérale 17 de la cuve 3 grâce à un moyen d'ajustement constitué de préférence par un fil métallique sensiblement rigide 13. Ce fil 13 vient s'appuyer sur la platine 16 de préférence au niveau d'emboutis 15, par exemple au nombre de deux. Le fil 13 est rendu solidaire de la paroi intérieure 27 du bâti 1 de préférence grâce à des ouvertures 14 par exemple au nombre de trois pratiquées dans ladite paroi 27, dans lesquelles des segments dudit fil 13 viennent s'insérer.

Les moyens de protection contre les surtempératures 6, avantageusement constitués par un fusible, viennent s'appuyer de préférence contre une paroi latérale 17 de la cuve 3. Lesdits moyens 6 sont avantageusement maintenus par un support élastique 35 inséré dans une ouverture 36 de la paroi intérieure 27 du bâti 1.

Les moyens de détection de présence 7 de la cuve 3 sont de préférence constitués par des moyens de transmission mécanique 18 coopérant avec des moyens de coupure 19 du circuit d'alimentation des moyens de chauffe 4, lesdits moyens de coupure 19 étant par exemple constitués par un switch. Les moyens de transmission mécanique 18 consistent par exemple en un piston 20 coulissant dans un logement 21, coopérant avec un moyen de rappel 22 tel qu'un ressort.

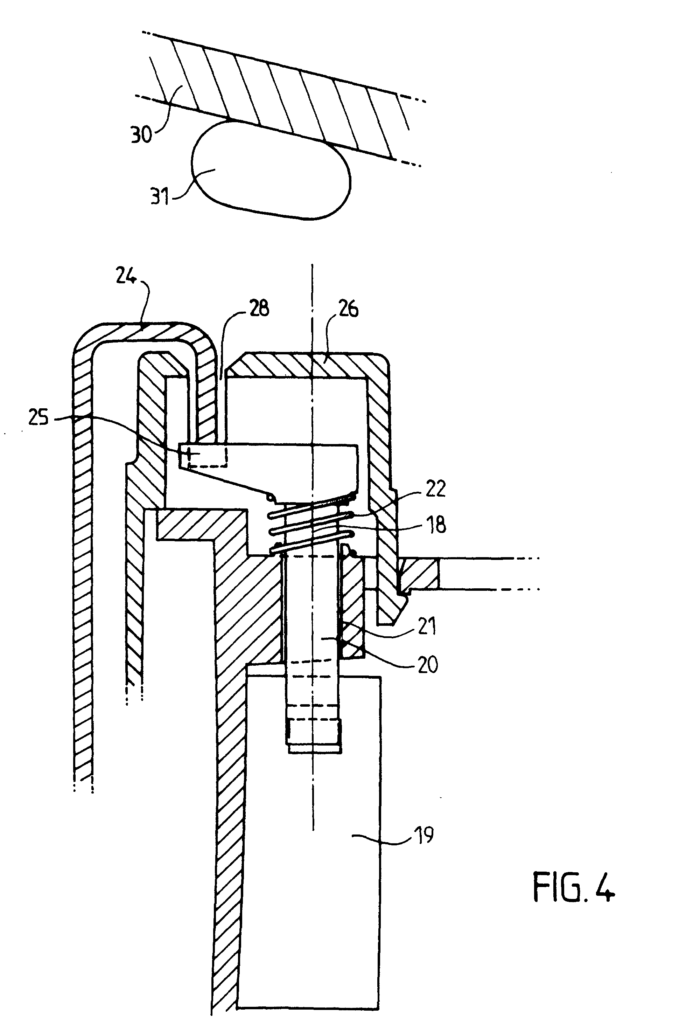

De préférence, le bord périphérique 24 de la cuve 3 est au moins partiellement replié dans sa partie supérieure. De cette façon la surface de contact entre le bord périphérique 24 et les moyens de transmission mécanique 18 est restreinte. Avantageusement lesdits moyens de transmission mécanique 18 sont protégés par un capot 26 comportant une rainure 28. La rainure 28 est disposée de manière à ce que le bord 24 de la cuve 3 correctement positionnée dans le logement 2 vienne actionner lesdits moyens de transmission mécanique 18. Dans la réalisation présentée à la figure 4, le bord 24 de la cuve 3 vient actionner la tête 25 du piston 20. De préférence, la largeur de ladite rainure 28 est prévue de manière à être légèrement supérieure à l'épaisseur du rebord 24 de la cuve 3.

Cette disposition permet d'éviter que l'utilisateur actionne de manière involontaire ou même volontaire les moyens de transmission mécanique 18, provoquant la fermeture du circuit d'alimentation des moyens de chauffe 4 et donc l'échauffement desdits moyens de chauffe 4, par exemple lorsqu'il met en place la cuve 3, ou lors de toute autre manoeuvre, et risque de se brûler en introduisant la main dans le logement 2 après avoir retiré la cuve 3.

Ladite disposition permet également d'éviter que le joint 31 du couvercle 30 n'actionne les moyens de transmission mécanique 18 lors de la fermeture dudit couvercle 30 en l'absence de la cuve 3 dans le logement 2.

La cuve 3 amovible est prévue pour recevoir une certaine quantité de cofacteur de cuisson 9, tel que huile végétale, graisse animale, saindoux, Végétaline ou tout autre corps gras susceptible de convenir pour réaliser une friture, ainsi que les aliments à frire.

L'appareil selon l'invention fonctionne de la manière suivante :

Lors de la mise en place de la cuve amovible 3 dans le logement 2, le fil 13 et le support élastique 35 plaquent respectivement l'organe de liaison 10 des moyens de régulation 5 et les moyens de protection contre les surtempératures 6 contre les parois de ladite cuve 3.

De préférence, la cuve 3 est en position lorsque les enfoncements 23 présents dans le fond de ladite cuve 3 s'agencent de façon à correspondre aux moyens de chauffe 4.

Lorsque la cuve 3 est correctement positionnée, le rebord 24 actionne les moyens de transmission mécanique 18, par exemple en appuyant sur la tête 25 du piston 20, et lesdits moyens de transmission mécanique 18 actionnent les moyens de coupure 19 du circuit d'alimentation des moyens de chauffe 4 de manière à fermer ledit circuit. L'appareil est alors susceptible de fonctionner.

En cas de mauvais positionnement de la cuve 3, par exemple lorsque la cuve 3 est tournée de 180° par rapport à sa position correcte, les enfoncements 23 ne correspondent pas aux moyens de chauffe 4 et la cuve 3 se trouve dans une position surélevée par rapport à la position correcte. Le rebord 24 ne peut actionner les moyens de transmission mécanique 18, par exemple en appuyant sur la tête 25 du piston 20, et les moyens de coupure 19 restent en position ouverte. L'appareil ne peut pas fonctionner.

En l'absence de cuve 3, les moyens de transmission mécanique 18 ne sont pas actionnés et les moyens de coupure 19 sont en position ouverte. L'appareil ne peut pas fonctionner. De préférence, la présence du capot 26 permet d'éviter que la fermeture du couvercle 30 provoque l'actionnement des moyens de transmission mécanique 18 par l'intermédiaire du joint d'étanchéité 31 dudit couvercle 30.

Lorsque la cuve 3 est présente et correctement positionnée, mais en l'absence de cofacteur de cuisson 9, par exemple huile végétale, graisse animale, saindoux, Végétaline ou tout autre corps gras susceptible de convenir pour réaliser une friture, ou en présence d'une quantité plus faible que le minimum indiqué, situations dans lesquelles il y a risque de surchauffe, les moyens de régulation provoquent une coupure du circuit d'alimentation des moyens de chauffe 4 avant que les moyens de protection contre les surtempératures 6 ne soient sollicités. Les moyens de protection contre les surtempératures 6 utilisés dans les friteuses étant généralement de type fusible, cette caractéristique de fonctionnement permet d'éviter leur dégradation irréversible. L'utilisateur ne subit pas le désagrément de devoir faire réparer son appareil lorsqu'il l'a utilisé avec une quantité trop faible de matière grasse, voire lorsqu'il a mis en marche l'appareil sans avoir mis de matière grasse.

L'invention n'est nullement limitée strictement à l'exemple de réalisation décrit précédemment, mais englobe de nombreuses modifications ou améliorations.

Notamment, on peut envisager que les moyens de régulation 5 et les moyens de protection contre les surtempératures 6 soient placés sur une même paroi latérale 17 de l'appareil.

On peut également envisager que le fil 13 servant de moyen d'ajustement à la platine 16 pour la plaquer contre la paroi latérale 17 ne soit pas d'un seul tenant mais qu'il soit par exemple composé de deux parties ou plus. On peut aussi envisager que la platine 16 soit fixée au bâti et que seul l'organe de liaison 10 soit mobile pour venir en contact avec la cuve. Par ailleurs, on peut envisager que la platine 16 serve elle-même de liaison thermique entre la cuve 3 et les moyens de régulation 5, en réalisant ladite platine 16 en matériau bon conducteur de la chaleur, par exemple un alliage d'aluminium ou de cuivre.

On peut également envisager que les moyens de transmission 18 soient totalement intégrés dans les moyens de coupure 19, la partie mécanique desdits moyens de coupure 19 prévue pour être actionnée par le rebord 24 de la cuve 3 étant alors réalisée dans un matériau supportant les niveaux de température atteints par le rebord 24 de ladite cuve 3.

### POSSIBILITES D'APPLICATION INDUSTRIELLE

L'invention trouve son application dans le domaine technique des appareils de chauffe ou de cuisson pour aliments en particulier pour la réalisation de fritures dans un bain d'huile.

## Revendications

1. Appareil de cuisson, notamment friteuse, à cuve (3) amovible destinée à contenir le cofacteur de cuisson (9) et les aliments à cuire, comprenant un bâti (1) dans lequel est prévu un logement (2) destiné à recevoir la cuve (3), des moyens de chauffe (4), des moyens de régulation (5), des moyens de protection contre les surtempératures (6) en relation thermique avec la cuve (3) permettant d'éviter que le niveau de température de la cuve (3) dépasse un seuil de sécurité préétabli, des moyens de détection de présence (7) de la cuve (3), **caractérisé en ce que** les moyens de chauffe (4) sont disposés au fond du logement (2), et **en ce que** les moyens de régulation (5) sont en relation thermique avec la cuve (3), permettent de contrôler le niveau de température de la cuve (3) et sont susceptibles de provoquer une coupure du circuit d'alimentation des moyens de chauffe (4) avant que les moyens de protection contre les surtempératures (6) ne soient sollicités, lorsque la cuve (3) comporte moins de cofacteur de cuisson (9) que la quantité minimum indiquée.

2. Appareil selon la revendication 1, dans lequel les moyens de régulation (5) sont agencés dans une paroi du logement (2) et comportent au moins un organe de liaison (10) prévu pour assurer une liaison thermique entre les moyens de régulation (5) et la cuve (3) placée en position de fonctionnement dans le logement (2), ledit organe étant monté mobile de façon à pouvoir se prolonger dans le logement (2) au-delà de la paroi du logement (2) en direction de la paroi de la cuve (3).

3. Appareil selon la revendication 2, dans lequel l'organe de liaison (10) est monté sur une platine (16) supportant les moyens de régulation (5) et montée mobile par rapport au bâti (1).

4. Appareil selon l'une des revendications 2 ou 3, dans lequel l'organe de liaison (10) est disposé de manière à exercer un contact mécanique contre la cuve (3) lorsque celle-ci est placée en position de fonctionnement.

5. Appareil selon l'une des revendications 3 ou 4, dans lequel la platine (16) comporte des moyens de positionnement (11) par rapport à la cuve (3), distincts de l'organe de liaison (10), disposés pour garantir un contact reproductible de l'organe de liaison (10) avec la cuve (3).

6. Appareil selon la revendication 5, dans lequel les moyens de positionnement (11) consistent en deux moyens de contact (12a, 12b).

7. Appareil selon l'une des revendications 3 à 6, dans lequel la platine (16) est maintenue contre la cuve (3) lorsque celle-ci est placée en position de fonctionnement grâce à des moyens d'ajustement constitués par un fil métallique sensiblement rigide (13) venant d'une part s'insérer dans des ouvertures (14) réalisées dans une paroi intérieure (27) du bâti (1), et d'autre part s'appuyer sur des emboutis (15) de la platine (16).

8. Appareil selon l'une des revendications 1 à 7, dans lequel les moyens de détection de présence (7) de la cuve (3) consistent en des moyens de transmission mécanique (18) coopérant avec des moyens de coupure (19) du circuit d'alimentation des moyens de chauffe (4) et disposés de manière à être actionnés par la cuve (3) lorsque celle-ci est placée en position de fonctionnement, lesdits moyens de détection de présence (7) étant prévus de manière à fermer ledit circuit d'alimentation lorsque la cuve (3) est correctement positionnée.

9. Appareil selon la revendication 8, dans lequel la cuve (3) comporte un bord périphérique (24) au moins partiellement replié dans sa partie supérieure de façon à agir sur les moyens de détection de présence (7) lorsque la cuve (3) est correctement positionnée.

10. Appareil selon la revendication 9, dans lequel les moyens de transmission mécanique (18) sont protégés par un capot (26) comportant une rainure (28).

11. Appareil selon la revendication 10, dans lequel la largeur de la rainure 28 est prévue de manière à être légèrement supérieure à l'épaisseur du rebord 24 de la cuve 3.

12. Appareil selon l'une des revendications 1 à 11, dans lequel le côté extérieur du fond de la cuve (3) comporte des enfoncements (23) dont la forme correspond sensiblement à celle des moyens de chauffe (4).

13. Appareil selon l'une des revendications 1 à 12, dans lequel les moyens de régulation (5) sont disposés contre une paroi latérale (17) de la cuve (3).

14. Appareil selon l'une des revendications 1 à 13, dans lequel les moyens de protection contre les surtempératures (6) sont disposés contre une paroi latérale (17) de la cuve (3).

## Patentansprüche

1. Kochgerät, insbesondere Friteuse, mit einer abnehmbaren Wanne (3), die das Kochmittel (9) und die zu kochenden Nahrungsmittel enthalten soll, mit einem Gestell (1), in dem eine Aufnahme (2) zum Aufnehmen der Wanne (3) vorgesehen ist, Heizmitteln (4), Regulierungsmitteln (5), Mitteln (6) zum Schutz gegen Überhitzung, die mit der Wanne (3) in Wärmeverbindung stehen und durch . die vermieden werden kann, daß das Temperaturniveau der Wanne (3) einen vorbestimmten Sicherheitsschwellenwert übersteigt, Mitteln (7) zum Erfassen des Vorhandenseins der Wanne (3), **dadurch gekennzeichnet, daß** die Heizmittel (4) am Boden der Aufnahme (2) angeordnet sind und daß die Regulierungsmittel (5) mit der Wanne (3) in Wärmeverbindung stehen, es ermöglichen, das Temperaturniveau der Wanne (3) zu steuern, und ein Unterbrechen des Versorgungskreises der Heizmittel (4) bewirken können, bevor die Mittel (6) zum Schutz gegen Überhitzung beansprucht werden, wenn die Wanne (3) weniger Kochmittel (9) als die angegebene Mindestmenge enthält,

2. Gerät nach Anspruch 1, bei dem die Regulierungsmittel (5) in einer Wand der Aufnahme (2) angeordnet sind und zumindest ein Verbindungsorgan (10) aufweisen, das vorgesehen ist, um eine Wärmeverbindung zwischen den Regulierungsmitteln (5) und der in der Aufnahme (2) in Betriebsstellung gebrachten Wanne (3) zu gewährleisten, wobei das Organ beweglich angebracht ist, um sich so in der Aufnahme (2) in Richtung der Wand der Wanne (3) über die Wand der Aufnahme (2) hinaus fortsetzen zu können.

3. Gerät nach Anspruch 2, bei dem das Verbindungsorgan (10) auf einer Tragplatte (16) angebracht ist, welche die Regulierungsmittel (5) trägt und relativ zum Gestell (1) beweglich angebracht ist.

4. Gerät nach einem der Ansprüche 2 oder 3, bei dem das Verbindungsorgan (10) so angeordnet ist, daß es dann einen mechanischen Kontakt mit der Wanne (3) herstellt, wenn diese in Betriebsstellung gebracht ist.

5. Gerät nach einem der Ansprüche 3 oder 4, bei dem die Tragplatte (16) Mittel (11) zum Positionieren bezüglich der Wanne (3) enthält, die vom Verbindungsorgan (10) entfernt liegen und dafür vorgesehen sind, einen reproduzierbaren Kontakt des Verbindungsorgans (10) mit der Wanne (3) zu gewährleisten.

6. Gerät nach Anspruch 5, bei dem die Stellmittel (11) aus zwei Kontaktmitteln (12a, 12b) bestehen.

7. Gerät nach einem der Ansprüche 3 bis 6, bei dem die Tragplatte (16), wenn die Wanne (3) in die Betriebsstellung gebracht ist, an der Wanne (3) durch Justiermittel gehalten ist, die aus einem im wesentlichen starren Draht (13) bestehen, der sich einerseits in Öffnungen (14) einfügt, die in einer Innenwand (27) des Gestells (1) ausgeführt sind, und der sich andererseits an Ansatzstücken (15) der Tragplatte (16) abstützt.

8. Gerät nach einem der Ansprüche 1 bis 7, bei dem die Mittel (7) zum Erfassen des Vorhandenseins der Wanne (3) aus Mitteln (18) zur mechanischen Übertragung bestehen, die mit Mitteln (19) zum Unterbrechen des Stromkreises der Heizmittel (4) zusammenwirken und so angeordnet sind, daß sie durch die Wanne (3) betätigt werden, wenn diese in die Betriebsstellung gebracht ist, wobei die Mittel (7) zum Erfassen des Vorhandenseins so vorgesehen sind, daß sie den Stromkreis schließen, wenn die Wanne (3) korrekt angebracht ist.

9. Gerät nach Anspruch 8, bei dem die Wanne (3) einen Umfangsrand (24) enthält, der zumindest teilweise in seinem oberen Bereich so umgebogen ist, daß er auf die Mittel (7) zum Erfassen des Vorhandenseins einwirkt, wenn die Wanne (3) korrekt angebracht ist.

10. Gerät nach Anspruch 9, bei dem die Mittel (18) zur mechanischen Übertragung durch eine Kappe (26) geschützt werden, die eine Nut (28) aufweist.

11. Gerät nach Anspruch 10, bei dem die Breite der Nut (28) so gewählt ist, daß sie etwas größer als die Dicke des Randes (24) der Wanne (3) ist.

12. Gerät nach einem der Ansprüche 1 bis 12, bei dem die Außenseite des Bodens der Wanne (3) Vertiefungen (23) aufweist, die in ihrer Form im wesentlichen den Heizmitteln (4) entsprechen.

13. Gerät nach einem der Ansprüche 1 bis 12, bei dem die Regulierungsmittel (5) an einer Seitenwand (17) der Wanne (3) angeordnet sind.

14. Gerät nach einem der Ansprüche 1 bis 13, bei dem die Mittel (6) zum Schutz gegen Überhitzung an einer Seitenwand (17) der Wanne (3) angeordnet sind.

## Claims

1. A cooking appliance, in particular a deep fat fryer, having a removable vessel (3) designed to contain the cooking medium (9) and the foodstuffs to be cooked, the fryer comprising a frame (1) in which there are provided: a housing (2) designed to receive the vessel (3); heater means (4); control means (5); protection means (6) for protecting against overheating, the protection means being in thermal relationship with the vessel (3) and serving to prevent the temperature level of the vessel (3) exceeding a pre-established safety threshold; and detection means (7) for detecting the presence of the vessel (3), the fryer being **characterized in that** the heater means (4) are disposed at the bottom of the housing (2), and **in that** the control means (5) are in thermal relationship with the vessel (3) enabling the temperature level of the vessel (3) to be controlled, and are capable of interrupting the power supply circuit of the heater means (4) before the protection means (6) are triggered, when the vessel (3) includes less cooking medium (9) than the recommended minimum quantity.

2. An appliance according to claim 1, in which the control means (5) are arranged in a wall of the housing (2) and include at least one connection member (10) provided to ensure thermal connection between the control means (5) and the vessel (3) when placed in the operating position in the housing (2), said member being movably mounted so as to be able to extend into the housing (2) beyond the wall of the housing (2) towards the wall of the vessel (3).

3. An appliance according to claim 2, in which the connection member (10) is mounted on a plate (16) supporting the control means (5) and movably mounted relative to the frame (1).

4. An appliance according to claim 2 or 3, in which the connection member (10) is disposed so as to exert mechanical contact against the vessel (3) when said vessel is placed in the operating position.

5. An appliance according to claim 3 or 4, in which the plate (16) includes positioning means (11) for positioning it relative to the vessel (3), which means are different from the connection member (10) and disposed to guarantee reproducible contact of the connection member (10) with the vessel (3).

6. An appliance according to claim 5, in which the positioning means (11) consist of two contact means (12a, 12b).

7. An appliance according to any one of claims 3 to 6, in which the plate (16) is held against the vessel (3), when said vessel is placed in the operating position, by adjustment means constituted by a substantially rigid metal wire (13) that is firstly inserted into openings (14) made in an inside wall (27) of the frame (1), and that secondly comes to bear on indentations (15) of the plate (16).

8. An appliance according to any one of claims 1 to 7, in which the detection means (7) for detecting the presence of the vessel (3) consist of mechanical transmission means (18) co-operating with interruption means (19) for interrupting the power supply circuit of the heater means (4), and disposed so as to be actuated by the vessel (3) when said vessel is placed in the operating position, said presence-detection means (7) being provided so as to close said power supply circuit when the vessel (3) is correctly positioned.

9. An appliance according to claim 8, in which the vessel (3) includes a peripheral edge (24) that is folded, at least in part, in its upper portion, so as to act on the presence-detection means (7) when the vessel (3) is correctly positioned.

10. An appliance according to claim 9, in which the mechanical transmission means (18) are protected by a cover (26) including a groove (28).

11. An appliance according to claim 10, in which the width of the groove (28) is provided so as to be slightly wider than the thickness of the rim (24) of the vessel (3).

12. An appliance according to any one of claims 1 to 11, in which the outside of the bottom of the vessel (3) includes recesses (23) each having a shape that substantially corresponds to the shape of the heater means (4).

13. An appliance according to any one of claims 1 to 12, in which the control means (5) are disposed against a side wall (17) of the vessel (3).

14. An appliance according to any one of claims 1 to 13, in which the protection means (6) for protecting against overheating are disposed against a side wall (17) of the vessel (3).
